# EUROPEAN PATENT APPLICATION

(11) **EP 3 070 829 A1**
(43) Date of publication of application: **21.09.2016**
(21) Application number: 14862361.4
(22) Date of filing: 14.10.2014
(51) Int. Cl.: H02M 7/12

(54) **ISOLATED AC-DC CONVERSION DEVICE AND CONVERSION METHOD THEREOF**

(30) Priority: 14.11.2013 CN 201310577968
(71) Applicant: Hep Tech Co. Ltd., 408 Taichung City (TW)
(72) Inventor: PAN, Ching Tsai, Hsinchu City 300 (TW); CHEN, Po Yan, Taipei City 116 (TW); HUNG, Ta Sheng, Taichung City 408 (TW)
(74) Representative: Lermer, Christoph
(86) International application number: PCT/CN2014/000905
(87) International publication number: WO 2015/070514

(57) **Abstract**

An isolated AC-DC conversion device is provided, which include a rectifier circuit (10), an active power factor correction circuit (20), an isolated transformer (30) and an automatic charge pump circuit (40). The rectifier circuit is connected to an AC power source (100) to receive electrical energy outputted from the AC power source, convert the electrical energy to DC electrical energy and output the DC electrical energy. The active power factor correction circuit is connected to the output terminal of the rectifier circuit to receive the DC electrical energy outputted by the rectifier circuit, increase the power factor, and then output the DC electrical energy. The primary side of the isolation transformer is connected to the active power factor correction circuit. One side of the automatic charge pump circuit is electrically connected to the secondary side of the isolation transformer, and the other side is connected to a load (200).

## Description

### TECHNICAL FIELD

The present disclosure relates to power conversion, in particular to an isolated AC-DC conversion device and the conversion method thereof.

### BACKGROUND

The most obvious difference between the isolated electricity energy transmission system and the common contact-type electricity energy transmission system is that the isolated electricity energy transmission system does not need to directly transmit the electricity energy via power lines, but transmits the electricity energy from the primary side to the secondary side via the electromagnetic coupling of the isolation transformer; however, due to the poor coupling of the isolation transformer, the power conversion efficiency will be decreased. Thus, the conventional isolated electricity energy transmission system usually uses the resonant-type impedance matching method to increase the power conversion efficiency; however, the circuit realized by the resonant-type impedance matching method tends to be influenced by the coupling coefficients of the isolation transformer, so cannot reach the anticipated effect, which will reduce the power conversion efficiency.

In addition, when the conventional AC-DC conversion device using the isolated electricity energy transmission system is in operation, the phase of the input voltage of the AC power source tends to be different from that of the input current, which will reduce the power factor and make the total harmonic distortion more serious. Besides, the output capacitor can be charged only when the voltage of the DC electricity energy outputted from the internal rectifier circuit is higher than that of the output capacitor; therefore, the charging time of the capacitor will be reduced to cause the peak value of the operation current to increase accordingly, which will not only distort the waveform of the input current and reduce the power factor, but also will seriously distort the DC electricity energy outputted to the load.

### SUMMARY

In view of above, the object of the present invention is to provide an isolated AC-DC conversion device, which not only has the advantage of high power factor, but also can achieve swift response and low-ripple output voltage.

The object of the present invention and the technical problems solved by the present invention are realized by the following technical schemes. So as to achieve the above object, the present invention provides an isolated AC-DC conversion device for converting the electricity energy outputted from a AC power source and then supply the electricity energy to a load, and the device includes a rectifier circuit, an active power factor correction circuit, an isolation transformer and an auto charge pump circuit. More specifically, the input terminal of the rectifier circuit is connected to the AC power source to receive the electrical energy from the AC power source, and convert the electrical energy into the DC electrical energy and then outputs the DC electrical energy from the output terminal of the rectifier circuit; besides, the output terminal has a positive terminal and a negative terminal. The active power factor correction circuit is connected to the output terminal of the rectifier circuit, and used for receiving the DC electrical energy outputted from the rectifier circuit, increasing the power factor of the DC electrical energy and then outputting the DC electrical energy; the active power factor correction circuit includes a first diode, wherein the cathode of the first diode is connected to the positive terminal; a first capacitor, wherein one end of the first capacitor is connected to the anode of the first diode; an electronic switch, wherein one end of the electronic switch is connected to the other end of the first capacitor, and the other end of the electronic switch is connected to the negative terminal; a first inductor, wherein one end of the first inductor is connected to the junction of the cathode of the first diode and the positive terminal, and the other end of the first inductor is connected to the junction of the first capacitor and the electronic switch; a second diode, wherein the anode of the second diode is connected to the junction of the electronic switch and the negative terminal. The isolation transformer includes a primary side and a secondary side, wherein the first end of the primary side is connected to the junction of the first diode and the first capacitor, and the second end of the primary side is connected to the cathode of the second diode. One side of the auto charge pump circuit is electrically connected to the isolation transformer, and the other side of the auto charge pump circuit is electrically connected to the load; the auto charge pump circuit includes a third diode, wherein the anode of the third diode is connected to the second end of the secondary side of the isolation transformer, and the cathode of the third diode is electrically connected to the first end of the secondary side of the isolation transformer; a second capacitor, wherein one end of the second capacitor is connected to the cathode of the third diode; a second inductor, wherein one end of the second inductor is connected to the other end of the first capacitor, and the other end of the second inductor is electrically connected to the junction of the cathode of the third diode and the second capacitor; a third capacitor, connected to the load in parallel, wherein one end of the third capacitor is connected to the junction of the second capacitor and the second inductor, and the other end of the third diode is connected to the junction of the anode of the third diode and the second end of the secondary side of the isolation transformer.

The object of the present invention and the technical problems solved by the present invention can be further realized by the following technical measures.

The isolated AC-DC conversion device, wherein the auto charge pump circuit further includes a fourth diode; one end of the fourth diode is connected to the junction of the cathode of the third diode and the second capacitor, and the other end of the fourth diode is connected to the third inductor, whereby the third inductor is electrically connected to the junction of the cathode of the third diode and the second capacitor via the fourth diode.

The isolated AC-DC conversion device, wherein the anode of the fourth diode is connected to the junction of the cathode of the third diode and the second capacitor, and the cathode of the fourth diode is connected to the third inductor.

The isolated AC-DC conversion device, wherein the auto charge pump circuit further includes a fifth diode; one end of the fifth diode is connected to one end of the secondary side of the isolation transformer, and the other end of the fifth diode is connected to the junction of the cathode of the third diode and the second capacitor, whereby the cathode of the third diode and the second capacitor is able to electrically connected to the first end of the secondary side of the isolation transformer via the fifth diode.

The isolated AC-DC conversion device, wherein the anode of the fifth diode is connected to the first end of the secondary side of the isolation transformer, and the cathode of the fifth diode is connected to the junction of the cathode of the third diode and the second capacitor.

The object of the present invention and the technical problems solved by the present invention are realized by further adopting the following technical schemes. According to the above idea, the power conversion method of the isolated AC-DC conversion device includes the following steps:

A. turning on the electronic switch to charge the first inductor by the DC electrical energy outputted from the rectifier circuit, and charging the primary side of the isolation transformer by the electricity energy stored in the first capacitor, and charging the third capacitor by the electricity energy stored in the second capacitor and the electricity energy stored in the second inductor so as to make the third capacitor release the electricity energy to the load;

B. turning off the electronic switch to block the DC electrical energy outputted from the rectifier circuit to charge the first capacitor by the electricity energy stored in the first inductor, and charging the second inductor, the second capacitor and the third capacitor by the electricity energy stored in the isolation transformer from the secondary side so as to make the third capacitor keep releasing the electricity energy to the load;

C. turning on the third diode to charge the third capacitor by the second capacitor and the second inductor so as to make the third capacitor keep releasing electricity energy to the load.

The object of the present invention and the technical problems solved by the present invention can be further realized by the following technical measures.

The power conversion method further includes a step after the step C, and the step is to repeat executing the step A to the step C.

The power conversion method, wherein after the step B, the first inductor stops releasing the electricity energy to turn off the first diode.

The power conversion method, wherein during the step B, after the second capacitor and the second inductor form the resonant circuit, the third diode is turned on and then power conversion method proceeds to the step C when the voltage across the second inductor is higher than the voltage across the third capacitor.

Accordingly, the isolated AC-DC conversion device and the conversion method thereof have at least the following advantages: by means of the above designs, the power factor can be increased during the power conversion, and can achieve the quick response and low-ripple output voltage.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

FIG. 1 is the circuit diagram of the isolated AC-DC conversion device of the preferred embodiment according to the present invention.
FIG. 2-FIG. 4 are the equivalent circuit diagrams of all steps of FIG. 1.

### DETAILED DESCRIPTION

The technical content of the present invention will become apparent by the detailed description of the following embodiments and the illustration of related drawings as follows.

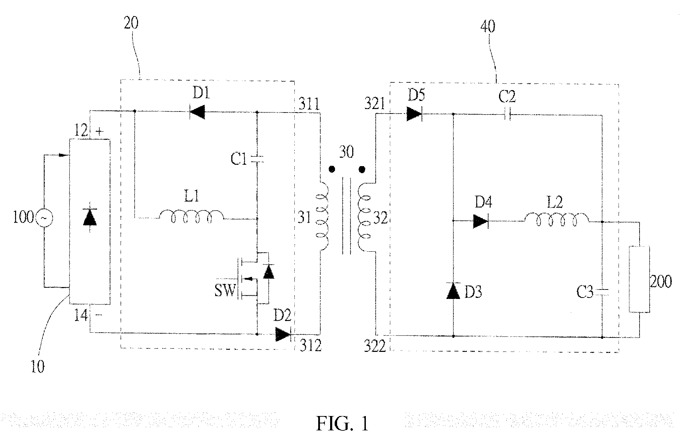

Please refer to FIG. 1; the isolated AC-DC conversion device of one preferred embodiment in accordance with the present invention is used for converting the electricity energy from an AC power source 100, and then supplying the electricity energy to a load 200; the isolated AC-DC conversion device includes a rectifier circuit 10, an active power factor correction circuit 20, an isolation transformer 30 and an auto charge pump circuit 40, wherein:

In the embodiment, the rectifier circuit 10 is a bridge rectifier, and the input terminal of the rectifier circuit 10 is connected to the AC power source 100 to receive the electrical energy from the AC power source 100, and convert the electrical energy into the DC electrical energy and then outputs the DC electrical energy from its output terminal; besides, the output terminal has a positive terminal 12 and a negative terminal 14 according to the power supplying polarity.

The active power factor correction circuit 20 is connected to the output terminal of the rectifier circuit 10, and used for receiving the DC electrical energy outputted from the rectifier circuit 10, increasing the power factor of the DC electrical energy and then outputting the DC electrical energy, and include 2 diodes (the first diode D1 and the second diode D2), a capacitor (the first capacitor C1), an inductor (the first inductor L1) and an electronic switch SW. The connection relations of the components are as follows:

The cathode of the first diode D1 is connected to the positive terminal 12.

One end of the first capacitor C1 is connected to the anode of the first diode.

One end of the electronic switch SW is connected to the other end of the first capacitor C1, and the other end is connected to the negative terminal 14.

One end of the first inductor L1 is connected to the junction of the cathode of the first diode D1 and the positive terminal 12, and the other end is connected to the junction of the first capacitor C1 and the electronic switch SW.

The anode of the second diode D2 is connected to the junction of the electronic switch SW and the negative terminal 14.

The isolation transformer 30 includes a primary side 31 and a secondary side 32. The primary side 31 and the secondary side 32 have the first ends 311, 321 and the second ends 312, 322 respectively. The first end 311 is connected to the junction of the first diode D1 and the first capacitor C1, and the second end 312 is connected to the cathode of the second diode D2.

The auto charge pump circuit 40 is connected to the secondary side 32 of the isolation transformer, and includes 3 diodes (the third diode D3, the fourth diode D4 and the fifth diode D5), 2 capacitors (the second capacitor C2 and the third capacitor C3) and an inductor (the second inductor L2). The connection relations of the components are as follows:

The anode of the fifth diode D5 is connected to the first end 321.

The anode of the third diode D3 is connected to the second end 322, and the cathode is electrically connected to the cathode of the fifth diode D5 so as to be electrically connected to the first end 321 via the fifth diode D5.

One end of the second capacitor C2 is connected to the junction of the cathode of the third diode D3 and the cathode of the fifth diode D5.

The anode of the fourth diode D4 is connected to the junction of the cathode of the third diode D3, the cathode of the fifth diode D5 and the second capacitor C2.

One end of the second inductor L2 is connected to the other end of the first capacitor C1, and the other end is electrically connected to the junction of the cathode of the third diode D3, the cathode of the fifth diode D5 and the second capacitor C2 via the fourth diode D4.

The third capacitor C3 is connected to the load 200 in parallel; one end of the third capacitor C3 is connected to the junction of the second capacitor C2 and the second inductor L2, and the other end is connected to the junction of the anode of the third diode D3 and the second end 322.

In the embodiment, the specifications of the capacitors C1∼C2, the inductors L1∼L2, the input voltage, the output voltage, the switching frequency of the electronic switch SW and the load 200 are as shown in the following table:

| | |
|---|---|
| First inductor L1 | 100µtH |
| Second inductor L2 | 80µH |
| First capacitor C1 | 100µF |
| Second capacitor C2 | 22F |
| Third capacitor C3 | 1µF |
| Input voltage Vin | 110V |
| Output voltage Vout | 24V |
| Switching frequency | 100KHz |
| Load resistance | 5Ω |

By means of the above structure design and specifications, the object of increasing the power conversion efficiency can be achieved by using the following power conversion method, and the method includes the following steps:

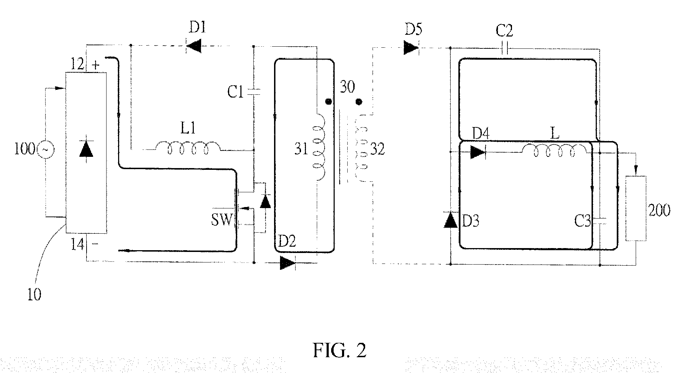

A. Please refer to FIG. 2, turn on the electronic switch SW to charge the first inductor L1 by the DC electrical energy outputted from the rectifier circuit 10, and charge the primary side 31 of the isolation transformer 30 by the electricity energy stored in the first capacitor C1, and charge the third capacitor C2 by the electricity energy stored in the second capacitor C2 and the electricity energy stored in the second inductor L2 so as to make the third capacitor C3 release the electricity energy to the load 200.

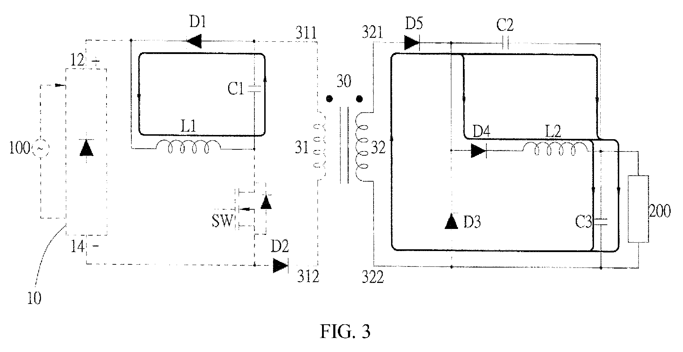

B. Please refer to FIG. 3, turn off the electronic switch SW to block the DC electrical energy outputted from the rectifier circuit 10 to charge the first capacitor C1 by the electricity energy stored in the first inductor L1, and charge the second inductor L2, the second capacitor C2 by the electricity energy stored in the isolation transformer 30 from the secondary side 32, and transmit the electricity energy to the third capacitor C3 via the resonant circuit formed by the second capacitor C2 and the second inductor L2 so as to make the third capacitor C3 keep releasing the electricity energy to the load.

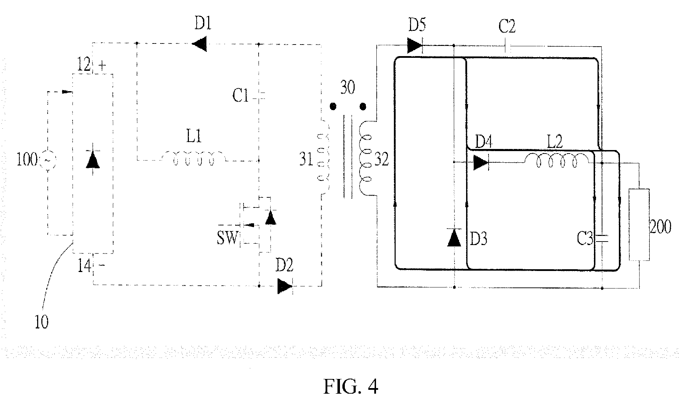

C. Please refer to FIG. 4, make the first inductor L1 stop releasing electricity energy to turn off the first diode D1, and turn on the third diode D3 to make the second capacitor C2 and the second inductor L2 charge the third capacitor C3 so as to make the third capacitor C3 keep releasing electricity energy to the load 200.

In addition, after the step A to the step C is executed for one time, it means the operation of one cycle is finished. Thus, when the isolated AC-DC conversion device is being in operation, after the step C, the step A to the step C should keep being executed until the isolated AC-DC conversion device stops operating.

By means of the above design of the auto charge pump circuit 40, in each operation cycle, the whole circuit structure is changed before and after the third diode D3, which can achieve the objects of quick response and low-ripple output voltage; meanwhile, the object of increasing the power factor can be achieved by switching the electronic switch SW.

Moreover, the design of the fourth diode D4 and the fifth diode D5 can further effectively prevent the backflow of the circuit from influencing the isolation transformer 30 and the operation of the auto charge pump circuit 40 respectively, which can make the whole circuit more stable so as to better the power conversion and the ripple voltage suppression effect of the isolated AC-DC conversion device. Of course, in practice, the objects of increasing the power conversion efficiency and the ripple voltage suppression effect can be still achieved without the fourth diode D4 and the fifth diode D5.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. An isolation AC-DC conversion device, **characterized in** being used for converting an electrical energy from an AC power source and supplying the electricity energy to a load, and comprising:
a rectifier circuit, an input terminal of the rectifier circuit being connected to the AC power source to receive the electrical energy from the AC power source, and convert the electrical energy into a DC electrical energy and then outputs the DC electrical energy from an output terminal of the rectifier circuit; the output terminal having a positive terminal and a negative terminal;
an active power factor correction circuit, being connected to the output terminal of the rectifier circuit, and used for receiving the DC electrical energy outputted from the rectifier circuit, increasing a power factor of the DC electrical energy and then outputting the DC electrical energy, comprising;
a first diode, a cathode of the first diode being connected to the positive terminal;
a first capacitor, one end of the first capacitor being connected to an anode of the first diode;
an electronic switch, one end of the electronic switch being connected to the other end of the first capacitor, and the other end of the electronic switch being connected to the negative terminal;
a first inductor, one end of the first inductor being connected to a junction of a cathode of the first diode and the positive terminal, and the other end of the first inductor being connected to a junction of the first capacitor and the electronic switch;
a second diode, an anode of the second diode being connected to a junction of the electronic switch and the negative terminal;
an isolation transformer, comprising a primary side and a secondary side; the first end of the primary side being connected to a junction of the first diode and the first capacitor, and a second end of the primary side being connected to a cathode of the second diode;
an auto charge pump circuit, one side of the auto charge pump circuit being electrically connected to the isolation transformer, and the other side of the auto charge pump circuit being electrically connected to the load; the auto charge pump circuit comprising:
a third diode, an anode of the third diode being connected to a second end of the secondary side of the isolation transformer, and a cathode of the third diode being electrically connected to a first end of the secondary side of the isolation transformer;
a second capacitor, one end of the second capacitor being connected to the cathode of the third diode;
a second inductor, one end of the second inductor being connected to the other end of the first capacitor, and the other end of the second inductor being electrically connected to a junction of the cathode of the third diode and the second capacitor;
a third capacitor, being connected to the load in parallel; one end of the third capacitor being connected to a junction of the second capacitor and the second inductor, and the other end of the third diode being connected to a junction of the anode of the third diode and the second end of the secondary side of the isolation transformer.

2. The isolation AC-DC conversion device of claim 1, **characterized in**: the auto charge pump circuit further comprising a fourth diode, wherein one end of the fourth diode is connected to the junction of the cathode of the third diode and the second capacitor, and the other end of the fourth diode is connected to the third inductor, whereby the third inductor is electrically connected to the junction of the cathode of the third diode and the second capacitor via the fourth diode.

3. The isolation AC-DC conversion device of claim 2, **characterized in**: the anode of the fourth diode being connected to the junction of the cathode of the third diode and the second capacitor, and the cathode of the fourth diode being connected to the third inductor.

4. The isolation AC-DC conversion device of claim 1, **characterized in**: the auto charge pump circuit further comprising a fifth diode; one end of the fifth diode being connected to one end of the secondary side of the isolation transformer, and the other end of the fifth diode being connected to the junction of the cathode of the third diode and the second capacitor, whereby the cathode of the third diode and the second capacitor being able to electrically connected to the first end of the secondary side of the isolation transformer via the fifth diode.

5. The isolation AC-DC conversion device of claim 4, **characterized in**: an anode of the fifth diode being connected to the first end of the secondary side of the isolation transformer, and a cathode of the fifth diode being connected to the junction of the cathode of the third diode and the second capacitor.

6. A power conversion method executed by the isolation AC-DC conversion device of claim 1, **characterized in** comprising the following steps:
A. turning on the electronic switch to charge the first inductor by the DC electrical energy outputted from the rectifier circuit, and charging the primary side of the isolation transformer by electricity energy stored in the first capacitor, and charging the third capacitor by electricity energy stored in the second capacitor and electricity energy stored in the second inductor so as to make the third capacitor release electricity energy to the load;
B. turning off the electronic switch to block the DC electrical energy outputted from the rectifier circuit to charge the first capacitor by electricity energy stored in the first inductor, and charging the second inductor, the second capacitor and the third capacitor by electricity energy stored in the isolation transformer from the secondary side so as to make the third capacitor keep releasing electricity energy to the load;
C. turning on the third diode to charge the third capacitor by the second capacitor and the second inductor so as to make the third capacitor keep releasing electricity energy to the load.

7. The power conversion method of claim 6, **characterized in**: further comprising a step after the step C, and the step being to repeat executing the step A to the step C.

8. The power conversion method of claim 6, **characterized in**: after the step B, the first inductor stopping releasing electricity energy to turn off the first diode.

9. The power conversion method of claim 6, **characterized in**: during the step B, the isolation transformer transmitting electricity energy to the third capacitor via a resonant circuit formed by the second capacitor and the second inductor.

10. The power conversion method of claim 9, **characterized in**: during the step B, after the second capacitor and the second inductor forming the resonant circuit, the third diode being turned on and then power conversion method proceeding to the step C when a voltage across the second inductor being higher than a voltage across the third capacitor.
